# EUROPÄISCHE PATENTSCHRIFT

(11) **EP 1 369 268 B1**
(45) Veröffentlichungstag und Bekanntmachung des Hinweises auf die Patenterteilung: **27.04.2005**
(21) Anmeldenummer: 03012075.2
(22) Anmeldetag: 28.05.2003
(51) Int. Cl.: B60H 1/00

(54) **Verfahren zur Bereitstellung von temperierter Luft und für dieses verwendbare Vorrichtung**
Method for providing cooling air and apparatus therefor
Procédé et appareil pour fournir de l'air de refroidissement

(30) Priorität: 04.06.2002 DE 10224763
(43) Veröffentlichungstag der Anmeldung: 10.12.2003
(73) Patentinhaber: Delphi Technologies, Inc., Troy, MI 48007 (US)
(72) Erfinder: Petesch, Jean-Claude, 8283 Kehlen (LU); Van Hauten, Hartmut E., 55129 Mainz (DE)
(74) Vertreter: Manitz, Finsterwald & Partner GbR

(56) Entgegenhaltungen:
- EP-A- 0 733 502
- EP-A- 0 768 197
- US-A- 4 665 971
- US-A1- 2002 007 944

## Beschreibung

Die vorliegende Erfindung betrifft ein Verfahren zur Bereitstellung von temperierter Luft für einen ersten und einen zweiten Bereich in einem Fahrzeug sowie eine Versorgungsvorrichtung zur Bereitstellung von Kaltund Warmluft für eine Fahrzeugklimaanlage.

Das Dokument US 4 665 971 offenbart den Oberbegriff der Ausprüche 1 und 4.

In vielen Fahrzeugen ist zur Erhöhung des Komforts eine Fahrzeugklimaanlage vorgesehen, mittels derer ein Innenraum einer Fahrgastzelle des Fahrzeugs durch Zuführung geeignet temperierter Luft klimatisierbar ist. Hierzu weist die Fahrzeugklimaanlage eine Versorgungsvorrichtung zur Bereitstellung von Kalt- und Warmluft auf. Von der Versorgungsvorrichtung bereitgestellte Kalt- und Warmluftströme werden entsprechend einer vorgegebenen Soll-Temperatur zu einem entsprechenden Strom temperierter Luft gemischt und der Fahrgastzelle zugeführt.

Zur Erhöhung des Komforts ist es wünschenswert, dass verschiedene Zonen der Fahrgastzelle individuell temperiert werden können, so dass beispielsweise Fahrgäste mit unterschiedlichem Wärme- bzw. Kälteempfinden jeweils eine für sie angenehme Temperatur in der Zone einstellen können, in der sie sich befinden. Um dies zu erreichen, kann beispielsweise ein Mehrzonen-Versorgungsmodul für einen Mehrzonen-Betrieb vorgesehen sein, in dem für jede zu temperierende Zone Ventile vorgesehen sind, um eine Stärke und eine Temperatur des Luftstroms für die entsprechende Zone einzustellen. Solche Mehrzonen-Versorgungsmodule sind jedoch sehr aufwändig. Dies ist insbesondere darauf zurückzuführen, dass für Zonen, die sich in größerer Entfernung von einem solchen, in der Regel im Frontbereich des Fahrzeugs eingebauten Mehrzonen-Versorgungsmodul befinden, ein höherer Druck zur Erzielung eines gewünschten Luftstroms bereitzustellen ist, als für näher an dem Mehrzonen-Versorgungsmodul gelegene Zonen, so dass entsprechende Maßnahmen zur Druckbereitstellung vorzunehmen sind.

Eine andere Möglichkeit zur Lösung des Problems besteht darin, ein Versorgungsmodul zur Bereitstellung von Kalt- und Warmluft für den Frontbereich und ein weiteres zur Bereitstellung von Kalt- und Warmluft für den Fondbereich bereitzustellen. Der damit verbundene technische Aufwand sowie die damit verbundenen Kosten sind jedoch für die meisten Anwendungsbereiche nicht tragbar.

Der vorliegenden Erfindung liegt daher die Aufgabe zugrunde, ein Verfahren zur Bereitstellung von temperierter Luft für einen ersten und einen zweiten Bereich in einem Fahrzeug bereitzustellen, das mit einfachen Mitteln durchführbar ist, sowie eine zur Durchführung des Verfahrens geeignete einfache Versorgungsvorrichtung zur Bereitstellung von Kaltund Warmluft zu schaffen.

Die Aufgabe wird gelöst durch ein Verfahren zur Bereitstellung von temperierter Luft für einen ersten und einen zweiten Bereich in einem Fahrzeug mit den Merkmalen des Anspruchs 1.

Das erfindungsgemäße Verfahren sieht vor, dass zur Bereitstellung von temperierter Luft für einen ersten und einen zweiten Bereich in einem Fahrzeug ein Kalt- und ein Warmluftstrom erzeugt werden, aus dem Kaltund dem Warmluftstrom jeweils wenigstens ein erster Kalt- bzw. Warmluftteilstrom gebildet wird und der erste Kaltluftteilstrom und der erste Warmluftteilstrom zu einem ersten temperierten Teilstrom für den ersten Bereich gemischt werden, und dass aus dem Kalt- und dem Warmluftstrom jeweils wenigstens ein zweiter Kalt- bzw. Warmluftteilstrom gebildet wird, der zweite Kaltluftteilstrom und der zweite Warmluftteilstrom mittels eines Hilfsgebläses getrennt gefördert und stromabwärts des Hilfsgebläses zu einem zweiten temperierten Teilstrom für den zweiten Bereich gemischt werden.

Die Aufgabe wird weiterhin gelöst durch eine Versorgungsvorrichtung zur Bereitstellung von Kalt- und Warmluft für eine Fahrzeugklimaanlage mit den Merkmalen des Anspruchs 4, die zur Durchführung des erfindungsgemäßen Verfahrens verwendbar ist.

Die erfindungsgemäße Versorgungsvorrichtung zur Bereitstellung von Kalt- und Warmluft für eine Fahrzeugklimaanlage umfasst eine Kalt- und Warmluftquelle, mittels derer ein Kaltluft- und ein Warmluftstrom erzeugtbar ist und die einen ersten Kaltluftauslass für bereitzustellende Kaltluft sowie einen ersten Warmluftauslass für bereitzustellende Warmluft aufweist, und ein Hilfsgebläse, das einen zur Zuführung von Kaltluft mit der Kalt- und Warmluftquelle verbundenen Kaltlufteinlass und einen zur Zuführung von Warmluft mit der Kalt- und Warmluftquelle verbundenen Warmlufteinlass sowie einen zweiten Kaltluftauslass und einen zweiten Warmluftauslass aufweist und mittels dessen die den Einlässen des Hilfsgebläses zugeführten Luftströme getrennt den entsprechenden zweiten Auslässen zum Ausstoß von bereitzustellender Kalt- bzw. Warmluft zuführbar sind.

Erfindungsgemäß werden also aus einem Kalt- und einem Warmluftstrom jeweils ein erster und ein zweiter Kalt- bzw. Warmluftteilstrom gebildet, wozu bei der erfindungsgemäßen Versorgungseinrichtung eine entsprechende Kalt- und Warmluftquelle vorgesehen ist, die einen ersten Kaltluftauslass für den ersten Kaltluftteilstrom und einen ersten Warmluftauslass für den ersten Warmluftteilstrom aufweist.

Zur Bereitstellung des zweiten Kalt- bzw. Warmluftteilstroms ist die Kaltund Warmluftquelle mit dem Hilfsgebläse verbunden.

Während der erste Kaltluftteilstrom und der erste Warmluftteilstrom ohne weitere Förderung durch das Hilfsgebläse zu einem ersten temperierten Teilstrom für den ersten Bereich gemischt werden, werden der zweite Kaltluftteilstrom und der zweite Warmluftteilstrom mittels des Hilfsgebläses getrennt gefördert und stromabwärts des Hilfsgebläses zu einem zweiten temperierten Teilstrom für den zweiten Bereich gemischt. Unter einer getrennten Förderung von Kalt- und Warmluftteilströmen wird im Rahmen der Erfindung auch verstanden, dass durch die Bauart des Hilfsgebläses bedingte, geringfügige Vermischungen der dem Hilfsgebläse zugeführten Kalt- bzw. Warmluftströme in geringem Ausmaß, vorzugsweise unterhalb von 10 %, möglich sind.

Das Hilfsgebläse der erfindungsgemäßen Versorgungsvorrichtung weist hierzu den mit der Kalt- und Warmluftquelle verbundenen Kaltlufteinlass und den zur Zuführung von Warmluft mit der Kalt- und Warmluftquelle verbundenen Warmlufteinlass auf. Dem Kaltlufteinlass zugeführte Kaltluft ist dann unter Druckerhöhung dem zweiten Kaltluftauslass des Hilfsgebläses zuführbar. Entsprechend ist der dem Warmlufteinlass zugeführte zweite Warmluftteilstrom unter Druckerhöhung dem zweiten Warmluftauslass zuführbar.

Mit der erfindungsgemäßen Versorgungsvorrichtung sind somit an deren Auslässen für den zweiten Bereich getrennt Kalt- bzw. Warmluftteilströme bereitstellbar, deren Druck bzw. Massenstrom in Bezug an den Druck bzw. Massenstrom der Kalt- bzw- Warmluftteilströme für den ersten Bereich anpassbar sind. Insbesondere sind bei Zuführung zu dem zweiten Bereich auftretende Druckverluste mittels des Hilfsgebläses kompensierbar.

Durch die getrennte Förderung bzw. Druckverstärkung des zweiten Kaltluftteilstroms und des zweiten Warmluftteilstroms kann der zweite Bereich individuell temperiert werden, ohne dass für diesen Bereich eine zweite Kalt- bzw. Warmluftquelle vorgesehen sein müsste oder dass ein aufwändiges Mehrzonen-Versorgungsmodul bereitgestellt werden müsste.

Gleichzeitig sind durch den Einsatz des Hilfsgebläses die beiden Bereiche des Fahrzeugs gleich gut mit temperierter Luft versorgbar.

Weiterbildungen und bevorzugte Ausführungsformen der Erfindung sind in der Beschreibung, den Zeichnungen und den Ansprüchen beschrieben.

Grundsätzlich kann das Hilfsgebläse zwei separat angetriebene Teilgebläse aufweisen, von denen eines dem zweiten Kaltluftteilstrom und das andere dem Warmluftteilstrom zugeordnet ist. Ein solches Hilfsgebläse ist jedoch konstruktiv aufwändig, da zwei Antriebe notwendig sind. Es ist daher bei der erfindungsgemäßen Versorgungsvorrichtung bevorzugt, dass das Hilfsgebläse zwei Gebläseräder umfasst, die gemeinsam von einer Antriebseinrichtung angetrieben sind. Bei der Antriebseinrichtung kann es sich insbesondere um einen Elektromotor, bevorzugt einen Elektromotor mit elektrisch bzw. elektronisch steuerbarer Drehzahl handeln. Jeweils eines der Gebläseräder dient dann zur Förderung eines Kalt- bzw. Warmluftstroms.

Grundsätzlich können die beiden Gebläseräder in zwei voneinander getrennten Kammern angeordnet und von einer gemeinsamen Welle angetrieben sein, so dass bei einer hinreichend guten Abdichtung eines Durchtritts der Welle durch wenigstens eine die beiden Kammern trennende Wand die Vermischung zwischen von dem einen Gebläserad geförderter Kaltluft und von dem anderen Gebläserad geförderter Warmluft minimiert werden kann. Eine solche Ausbildung ist jedoch für viele Anwendungen zu aufwändig. Dies ist insbesondere dann der Fall, wenn die Gebläseräder einzeln auf der Welle zu montieren sind.

Bei der erfindungsgemäßen Versorgungsvorrichtung ist es daher besonders bevorzugt, dass die Gebläseräder gemeinsam in einem einstückigen Bauteil ausgebildet sind. Grundsätzlich können auch hierbei zwei durch einen als Welle dienenden Hals getrennte Gebläseräder vorgesehen sein, vorzugsweise werden in dem einstückigen Bauteil die beiden Gebläseräder jedoch durch eine gemeinsame Trennwand voneinander abgetrennt. Ein solches Bauteil ist sehr einfach herzustellen. Darüber hinaus ist es einfach auf einer Welle lagerbar. Schließlich zeichnet es sich durch einen besonders geringen Platzbedarf aus, was angesichts des sehr beschränkten Raumangebots in einem Fahrzeug von großer Bedeutung sein kann.

Um eine möglichst einfach in einem Fahrzeug einzubauende erfindungsgemäße Versorgungsvorrichtung zu erhalten, ist es bevorzugt, dass das Hilfsgebläse zusammen mit der Kalt- und Warmluftquelle in einem gemeinsamen Gehäuse angeordnet ist. Hierunter wird insbesondere auch ein modular aufgebautes Gehäuse verstanden, bei dem ein Gehäuse des Hilfsgebläses mit einem Gehäuse der Kalt- und Warmluftquelle verbunden ist. Eine solche räumliche Zusammenfassung hat nicht nur den Vorteil, dass beim Einbau der erfindungsgemäßen Versorgungsvorrichtung in ein Kraftfahrzeug nur ein Teil zu montieren ist, sondern darüber hinaus wird auch die Bereitstellung der bei Verwendung eines elektrischen Antriebs für das Hilfsgebläse notwendigen elektrischen Anschlüsse stark vereinfacht, da diese mit den elektrischen Anschlüssen der Kalt- und Warmluftquelle zusammengefasst werden können.

Bei der Kalt- und Warmluftquelle kann es sich grundsätzlich um eine beliebige Einrichtung handeln, mittels derer Kalt- und Warmluft getrennt bereitstellbar ist. Dabei ist es bevorzugt, dass die Kalt- und Warmluftquelle ein mit einem Lufteinlass für zu temperierende Luft verbundenes Hauptgebläse, eine über einen Zuführungskanal mit dem Hauptgebläse verbundene Kühleinrichtung, eine mit der Kühleinrichtung verbundene, dieser nachgeordnete und zu dem ersten Kaltluftauslass führende Kaltluftkammer, eine mit der Kaltluftkammer verbundene Heizeinrichtung und eine mit der Heizeinrichtung verbundene, dieser nachgeordnete und zu dem ersten Warmluftauslass führende Warmluftkammer aufweist, wobei der Kalt- bzw. Warmlufteinlass des Hilfsgebläses mit der Kalt- bzw. Warmluftkammer verbunden ist. Vorzugsweise sind das Hauptgebläse wie auch das Hilfsgebläse elektrisch angetrieben.

Bei der Kühleinrichtung kann es sich um eine beliebige Einrichtung handeln, mittels derer ihr zugeführte Luft abkühlbar ist. Insbesondere kann hierzu ein elektrisch oder über einen Antrieb des Fahrzeugs, beispielsweise eine Brennkraftmaschine, angetriebener, konventioneller Verdampfer verwendet werden.

Als Heizeinrichtung kann eine beliebige Einrichtung dienen, mittels derer ihr zugeführte Luft auf eine höhere Temperatur erwärmbar ist. Hierbei kann es sich um einen von einer Antriebseinrichtung, insbesondere einer Brennkraftmaschine, des Fahrzeug unabhängige, elektrisch oder mit Kraftstoff betriebener Heizung handeln, bevorzugt wird jedoch ein Heizkern verwendet, dem zur Aufheizung eines durch ihn hindurch tretenden oder an ihm vorbeiströmenden Luftstroms eine beim Betrieb der Antriebseinrichtung des Fahrzeugs, insbesondere einer Brennkraftmaschine, aufgeheizte Flüssigkeit, beispielsweise Kühlflüssigkeit, zuführbar ist. Dadurch, dass die gesamte zugeführte Luft zunächst abgekühlt und dann teilweise wieder erhitzt wird, wird der Feuchtigkeitsgehalt der bereitgestellten Luft deutlich reduziert, so dass insbesondere ein Entfernen von Feuchtigkeit auf beschlagenen Scheiben und eine Trocknung des Fahrzeuginnenraums bei feuchter Witterung schneller erfolgen kann.

Um eine gleichmäßige Versorgung der beiden Bereiche mit Warmluft zu unterstützen, ist es bevorzugt, dass die Heizeinrichtung und das Hilfsgebläse direkt benachbart zueinander so angeordnet sind, dass ein Teilstrom eines von der Heizeinrichtung bereitgestellten Warmluftstroms quer zur Stromrichtung des restlichen Warmluftstroms von dem Hilfsgebläse ansaugbar ist. So ergibt sich eine gleichmäßige Abzweigung des Teilstroms über einen großen Anteil einer Austrittsfläche der Heizeinrichtung, die das Auftreten von übermäßig warmen oder kalten Bereichen an der Austrittsfläche weitgehend unterbindet.

Weiterer Gegenstand der Erfindung ist eine Klimaanlage zur Versorgung eines ersten und eines zweiten Bereichs in einem Fahrzeug mit temperierter Luft mit einer erfindungsgemäßen Versorgungseinrichtung und wenigstens einer mit dem ersten Kaltluftauslass und dem ersten Warmluftauslass über getrennte Verbindungskanäle verbundenen Dosier- und/oder Mischeinrichtung zur Dosierung und/oder Mischung von Warm- und Kaltluft zur Bereitstellung von temperierten Luft für den ersten Bereich sowie wenigstens einer mit dem zweiten Kaltluftauslass und dem zweiten Warmluftauslass über getrennte Verbindungskanäle verbundenen Dosierund/oder Mischeinrichtung zur Dosierung und/oder Mischung von Warm- und Kaltluft zur Bereitstellung von temperierter Luft für den zweiten Bereich. Bei den Dosier- und/oder Mischeinrichtungen kann es sich insbesondere um gleiche oder verschiedene stufenweise oder kontinuierlich verstellbare Drosseleinrichtungen bzw. Ventile, beispielsweise Absperr- bzw. Drosselklappen, handeln. Dabei können hinter den eigentlichen Drosseleinrichtungen bzw. Ventilen zusätzliche Mischelemente vorgesehen sein, mittels derer aus den Drosseleinrichtungen bzw. Ventilen austretende Kalt- und Warmluft vermischbar ist. Es ist jedoch auch möglich, die dosierten Luftströme einfach in den Fahrzeuginnenraum zu führen, wo sie sich durch normale Verwirbelung vermischen. Mittels der ersten und zweiten Dosier- und/oder Mischeinrichtungen können der erste Kalt- und Warmluftteilstrom sowie der zweite Kalt- und Warmluftteilstrom getrennt dosiert und gegebenenfalls gemischt werden, so dass getrennt einstellbar für den ersten und den zweiten Bereich in dem Fahrzeug temperierte Luft bereitstellbar ist.

Bei dem erfindungsgemäßen Verfahren ist es bevorzugt, dass der mit Hilfe des Hilfsgebläses geförderte zweite Kaltluftteilstrom und der mit Hilfe des Hilfsgebläses geförderte zweite Warmluftteilstrom jeweils in weitere Kalt- bzw. Warmluftteilströme aufgeteilt werden, und dass zur Bereitstellung von temperierter Luft für verschiedene Zonen in dem zweiten Bereich jeweils ein entsprechender weiterer Kaltluftteilstrom und ein entsprechender weiterer Warmluftteilstrom gemischt werden. Bei der erfindungsgemäßen Klimaanlage ist es dazu bevorzugt, dass sich wenigstens ein Verbindungskanal für Kaltluft und ein entsprechender Verbindungskanal für Warmluft, insbesondere jeweils für den zweiten Bereich, wenigstens einmal verzweigt und in bzw. an den entsprechenden Zweigen für Kalt- bzw. Warmluft jeweils Dosier- und/oder Mischeinrichtungen angeordnet sind. Bei dieser Weiterbildung der Erfindung ergibt sich der große Vorteil, dass in dem zweiten Bereich verschiedene Zonen jeweils mit individuell temperierten Luftströmen, gegebenenfalls individueller Stärke, versorgt werden können, ohne dass zusätzliche Verbindungskanäle von der Kalt- und Warmluftquelle oder von dem Hilfsgebläse in den zweiten Bereich geführt werden müssen. Insbesondere kann mit nur einem Hilfsgebläse einfach eine Verstärkung von temperierten Luftströmen für mehrere Zonen in dem zweiten Bereich erfolgen.

Es ist besonders bevorzugt, dass sich die mit den zweiten Auslässen verbundenen Verbindungskanäle jeweils in wenigstens vier Zweige verzweigen, von denen jeweils zwei einen oberen und unteren Bereich einer linken Fahrzeugseite und jeweils zwei andere einen oberen und unteren Bereich einer rechten Fahrzeugseite versorgen. Hierdurch lassen sich sowohl auf der rechten als auch auf der linken Fahrzeugseite jeweils der Fußraum und der darüber liegende Bereich unterschiedlich temperieren, was auch als "Bi-Levelsplit" bezeichnet wird. Trotz dieser sehr flexiblen Steuermöglichkeit für temperierte Luft ist durch die erfindungsgemäße Verwendung bzw. Anordnung des Hilfsgebläses nur ein Hilfsgebläse und eine Kalt- und Warmluftquelle notwendig.

Bevorzugt handelt es sich bei dem zweiten Bereich um den Fondbereich des Fahrzeugs, da wegen der Nähe zu einer Brennkraftmaschine des Fahrzeugs die Versorgungsvorrichtung vorzugsweise im Frontbereich angeordnet wird.

Die Erfindung wird nun weiter beispielhaft anhand der Zeichnungen erläutert. Es zeigen:
- Fig. 1: eine schematische teilweise Schnittansicht durch einen Abschnitt eines Kraftfahrzeugs mit einer Klimaanlage nach einer bevorzugten Ausführungsform der Erfindung, und
- Fig. 2: eine schematische Draufsicht auf den Abschnitt des Kraftfahrzeugs mit der Klimaanlage in Fig. 1.

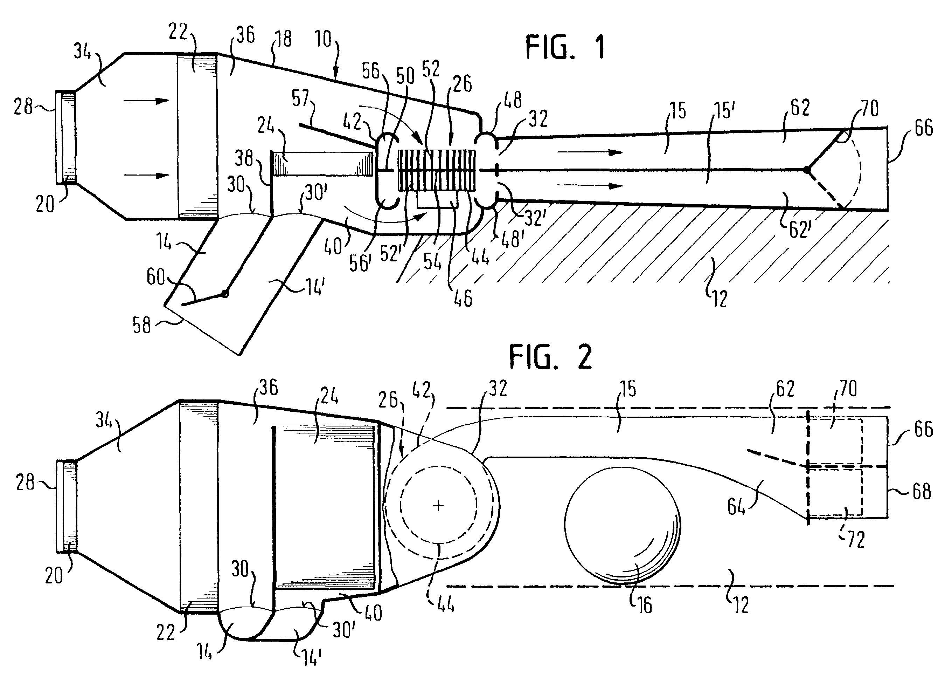

In den Fig. 1 und 2 weist eine Fahrzeugklimaanlage in einem nur ausschnittweise gezeigten Kraftfahrzeug eine Versorgungsvorrichtung 10 auf, die im Frontbereich des Kraftfahrzeugs teilweise auf einem Getriebetunnel 12 angeordnet ist. Erste vordere Verbindungskanäle 14 und 14' für Kalt- bzw. Warmluft für den Frontbereich des Kraftfahrzeugs und zweite rückwärtige Verbindungskanäle 15 und 15' für Kalt- bzw. Warmluft für einen Fondbereich des Kraftfahrzeugs sind mit der Versorgungsvorrichtung 10 verbunden, wobei die rückwärtigen Verbindungskanäle 15 und 15' von der Versorgungsvorrichtung 10 an einem Schalthebel 16 auf dem Getriebetunnel 12 vorbei in den Fondbereich führen.

Die Versorgungsvorrichtung 10 weist ein Gehäuse 18 auf, in dem, in den Figuren nur schematisch gezeigt, ein Hauptgebläse 20, ein Verdampfer 22, ein Heizkern 24 sowie ein Hilfsgebläse 26 angeordnet sind.

Das Gehäuse 18 weist einen Lufteinlass 28, erste Kalt- und Warmluftauslässe 30 und 30' und zweite Kalt- und Warmluftauslässe 32 und 32' auf.

Ein Innenraum des Gehäuses 18 teilt sich auf in einen Ansaugtrakt 34 zwischen dem Lufteinlass 28 und dem Verdampfer 22, eine Kaltluftkammer 36, die durch den Verdampfer 22 auf der einen Seite und durch das Hilfsgebläse 26, den sich unmittelbar an das Hilfsgebläse 26 luftdicht anschließenden Heizkern 24 und eine sich von dem Heizkern 24 zu dem Gehäuse 18 erstreckende Abtrennung 38 auf der anderen Seite begrenzt ist, und eine den Rest des Innenraums einnehmende Warmluftkammer 40.

Die Kaltluftkammer 36 mündet in den ersten Kaltluftauslass 30, die Warmluftkammer 40 in den ersten Warmluftauslass 30'.

Das Hauptgebläse 20 ist in Strömungsrichtung hinter dem Lufteinlass 28 innerhalb des Ansaugtrakts 34 angeordnet und fördert durch den Lufteinlass 28 Luft zu dem Verdampfer 22.

Der Verdampfer 22 dient der Kühlung der von dem Hauptgebläse 20 zugeführten Luft, die unter Abkühlung durch diesen hindurch in die Kaltluftkammer 36 gedrückt wird. Der Verdampfer 22 ist, in den Figuren nicht gezeigt, in konventioneller Weise über einen Riemenantrieb von einer Verbrennungsmaschine des Kraftfahrzeugs angetrieben.

Der Heizkern 24 ist stromabwärts des Verdampfers 22 angeordnet und dient zur Erwärmung von aus der Kaltluftkammer 36 durch ihn hindurch in die Warmluftkammer 40 tretender Luft. Der Heizkern 24 ist hierzu in konventioneller Weise aufgebaut und, in den Figuren nicht gezeigt, in üblicher Weise mit dem Kühlwasserkreislauf der Verbrennungsmaschine des Kraftfahrzeugs verbunden.

Das Hilfsgebläse 26 weist ein ringförmiges Hilfsgebläsegehäuse 42, eine darin angeordnete Gebläserädereinheit 48 sowie einen Antriebsmotor 54 auf.

Die Wände des Hilfsgebläsegehäuses 42 sind jeweils oberhalb und unterhalb der Ringebene unter Ausbildung oberer und unterer Gehäuseabschlüsse 48 und 48' in Richtung auf eine Mittelebene des Hilfsgebläsegehäuses 42 konvex nach innen gebogen.

Weiterhin ist eine an der Innenseite des Hilfsgebläsegehäuses 42 umlaufende, auf halber Höhe und in der Ringebene des Hilfsgebläsegehäuses 42 verlaufende Trennwand 50 vorgesehen, die sich in radialer Richtung weniger weit in das Ringinnere erstreckt als die oberen und unteren Gehäuseabschlüsse 48 und 48' des Hilfsgebläsegehäuses 42.

Ein Teil des Hilfsgebläsegehäuses 42 bildet einen Abschnitt des Gehäuses 18 der Versorgungsvorrichtung 10. In diesem Abschnitt des Hilfsgebläsegehäuses 42 sind jeweils ober- bzw. unterhalb der Trennwand 50 der zweite Kaltluftauslass 32 und der zweiter Warmluftauslass 32' ausgebildet.

Die Gebläserädereinheit ist konzentrisch in dem Hilfsgebläsegehäuse 42 auf einer in den Figuren nicht gezeigten Abtriebswelle des elektrischen Antriebsmotors 54 gelagert, der so nicht nur zum Antrieb der Gebläserädereinheit 44, sondern auch zu deren Lagerung dient.

Die Gebläserädereinheit 48 ist einstückig ausgebildet und umfasst zwei Gebläseräder 52 und 52', die parallel zueinander in der Ringebene des Hilfsgebläsegehäuses 42 angeordnet und durch eine gemeinsame Trennwand 54 voneinander getrennt sind.

Der Durchmesser der Gebläseräder 52 und 52' ist derart gewählt, dass die konvex gebogenen oberen und unteren Gehäuseabschlüsse 48 und 48' des Hilfsgebläsegehäuses 42 über die Ober- bzw. Unterseite der Gebläserädereinheit 44 greifen und nur ein kleiner Spalt zwischen der Trennwand 50 des Hilfsgebläsegehäuses 42 und der Trennwand 54 der Gebläserädereinheit 44 besteht. Es werden so durch die Trennwand 50, entsprechende oberhalb bzw. unterhalb der Trennwand 50 gebildete Abschnitte des Hilfsgebläsegehäuses 42 und die Gebläseräder 52 bzw. 52' zwei im Wesentlichen voneinander getrennte Hilfsgebläsekammern 56 bzw. 56' für Kalt- bzw. Warmluft gebildet, die in den zweiten Kaltluftauslass 32 und den zweiten Warmluftauslass 32' münden.

Die Gebläseräder 52 und 52' sind weiterhin so ausgebildet, dass sie bei Drehung durch den Antriebsmotor 46 von ihrer Stirnseite her Luft ansaugen und in die entsprechenden Hilfsgebläsekammern 56 bzw. 56' unter Druckerhöhung befördern. Die stirnseitigen Öffnungen des Hilfsgebläsegehäuses 42 dienen so als Kalt- bzw. Warmlufteinlässe für das Hilfsgebläse 26.

Die geförderte Luft kann dann durch die entsprechenden Auslässe 32 und 32' im Wesentlichen getrennt ausgelassen werden.

Der Heizkern 24 und das Hilfsgebläse 26 sind in Strömungsrichtung direkt zueinander benachbart in etwa in einer Ebene angeordnet. Hierdurch ist von dem Heizkern 24 in die Warmluftkammer 40 abgegebene Warmluft quer zu einer Auslassfläche bzw. Warmluftauslassrichtung des Heizkern 24 gleichmäßig von dem Hilfsgebläse 26 absaugbar, so dass sich in der Warmluftkammer 40 keine Bereiche wärmerer oder kälterer Luft stromabwärts des Heizkerns 24 ausbilden können, die zu einer unterschiedlichen Versorgung des ersten Warmluftauslasses 30' und des zweiten Warmluftauslasses 32' mit Warmluft führen könnten.

Durch eine Leitfläche 57, die an dem in Strömungsrichtung gelegenen Ende des Heizkerns 24 an diesem anliegt und entgegen der Strömungsrichtung schräg nach oben von dem Heizkern 24 absteht, ist ein oberhalb des Heizkerns 24 vorbei streichender Luftstrom in der Kaltluftkammer 36 teilweise dem Heizkern 24 zuleitbar, während ein verbleibender Luftstrom in Richtung des Hilfsgebläses 26 geführt wird.

Beim Betrieb der Versorgungsvorrichtung wird durch den Lufteinlass 28 von dem Hauptgebläse 20 in den Ansaugtrakt angesaugt Luft unter Abkühlung durch den Verdampfer 22 in die Kaltluftkammer 36 gedrückt, wo der entstehende Kaltluftstrom in drei Teilströme aufgeteilt wird, von denen einer in den ersten Kaltluftauslass 30, ein zweiter über das erste Gebläserad 52 durch die Kammer 56 des Hilfsgebläses 26 zu dem zweiten Kaltluftauslass 32 und ein dritter durch den Heizkern 24 geleitet wird.

Der dritte Teilstrom wird dabei in dem Heizkern 24 erwärmt und nach Eintritt in die Warmluftkammer 40 in einen ersten Warmluftteilstrom, der dem ersten Warmluftauslass 30' zugeführt wird, und einen zweiten Warmluftteilstrom, der über das Gebläserad 52' durch die Kammer 56' des Hilfsgebläses in den zweiten Warmluftauslass 32' gefördert wird, aufgeteilt.

Die vorderen Verbindungskanäle 14 und 14' für Kalt- bzw. Warmluft sind mit dem ersten Kalt- bzw. Warmluftauslass 30 bzw. 30' verbunden. Sie gehen nach einer in den Figuren nicht gezeigten Verzweigung in weitere, getrennte vordere Verbindungskanäle für Kalt- bzw. Warmluft in einen vorderen Misch- und Auslasskanal 58 über, wobei an ihrem Ende eine erste Dosiervorrichtung in Gestalt einer kontinuierlich verstellbaren Drosselklappe 60 angeordnet ist, die mittels eines in den Figuren nicht gezeigten Stellmotors zwischen einer Warmluftanschlagstellung, in der der vordere Verbindungskanal 14 für Kaltluft abgesperrt ist und einer Kaltluftstellung, in der der vordere Verbindungskanal 14' für Warmluft abgesperrt ist, kontinuierlich verstellbar ist.

Aus den vorderen Verbindungskanälen 14 und 14' austretende, dosierte Kalt- und Warmluftteilströme werden in dem vorderen Misch- und Auslasskanal 58 unter Mischung zu einem temperierten Luftstrom für eine Zone des Frontbereichs des Fahrzeugs zusammengeführt.

Die in den Figuren nicht gezeigten, von den Verbindungskanälen 14 und 14' abgezweigten weitere Verbindungskanäle weisen ebenfalls kontinuierlich verstellbare Drosselklappen auf, die von der Drosselklappe 60 unabhängig verstellbar sind, und dienen zur Speisung anderer Zonen im Frontbereich des Fahrzeugs mit temperierter Luft.

Die rückwärtigen Verbindungskanäle 15 und 15' für Kalt- und Warmluft sind mit dem zweiten Kaltluftauslass 32 bzw. dem zweiten Warmluftauslass 32' des Hilfsgebläses 26 verbunden.

Der Kalt- und der Warmluftauslass 32 bzw. 32' des Hilfsgebläses 26 sind dabei seitlich bezogen auf eine Längsrichtung des Getriebetunnels 12 ausgerichtet, so dass die an ihrem mit dem Hilfsgebläse 26 verbundenen Ende gebogenen rückwärtigen Verbindungskanäle 15 und 15' an dem Schalthebel 16 auf dem Getriebetunnel 12 vorbei in den Fondbereich des Kraftfahrzeugs führbar sind.

Die rückwärtigen Verbindungskanäle 15 und 15' verzweigen jeweils stromabwärts des Schalthebels 16 in weitere rückwärtige Verbindungskanäle für Kalt- und Warmluft, von denen in den Figuren nur die Verbindungskanäle 62 bzw. 62' für Kalt- bzw. Warmluft und 64 für Kaltluft sichtbar sind. Die weiteren rückwärtigen Verbindungskanäle 62 und 62' sowie der weitere rückwärtige Verbindungskanal 64 und der diesem entsprechende, in den Figuren nicht sichtbare weitere rückwärtige Verbindungskanal münden in hintere Misch- und Auslasskanäle 66 und 68, die in verschiedene Zonen im Fondbereich des Fahrzeugs führen. Am Ende der weiteren rückwärtigen Verbindungskanäle 62 und 62' sowie des weiteren rückwärtigen Verbindungskanals 64 und des diesem entsprechenden in den Figuren nicht sichtbaren Verbindungskanals für Warmluft sind jeweils als zweite Drosseleinrichtungen schwenkbare Drosselklappen 70 bzw. 72 angebracht, die mittels eines in den Figuren nicht gezeigten Stellmotors zwischen einer Warmluftanschlagstellung, in der der Kaltluftabschnitt abgesperrt ist und einer Kaltluftstellung, in der der Warmluftabschnitt abgesperrt ist, kontinuierlich verstellbar sind.

Wie bereits geschildert, werden in der Versorgungsvorrichtung 10 aus einem Kaltluftstrom ein erster Kaltluftteilstrom und ein zweiter Kaltluftteilstrom gebildet, die durch den ersten Kaltluftauslass 30 bzw. nach Druckerhöhung in dem Hilfsgebläse 26 durch den zweiten Kaltluftauslass 32 in die Verbindungskanäle 14 bzw. 15 geführt werden, wo sie in entsprechenden Verzweigungen, von denen in den Figuren nur die Verzweigung des rückwärtigen Verbindungskanals 15 in die weiteren rückwärtigen Verbindungskanäle 62 und 64 gezeigt ist, in weitere Kaltluftteilströme aufgeteilt werden. Weiterhin werden in der Versorgungseinrichtung aus einem Warmluftstrom ein erster und ein zweiter Warmluftteilstrom gebildet, die durch den ersten Warmluftauslass 30' bzw. nach Druckerhöhung in dem Hilfsgebläse 26 durch den zweiten Warmluftauslass 32' in die Verbindungskanäle 14' bzw. 15' geführt werden, wo sie in entsprechenden Verzweigungen, von denen in den Figuren nur die Verzweigung des rückwärtigen Verbindungskanals 15' gezeigt ist, in weitere Warmluftteilströme aufgeteilt werden.

Je nach Stellung der Drosselklappen 60 bzw. 70 und 72 werden die entsprechenden Kalt- und Warmluftteilströme dann zu temperierten Luftströmen gemischt, die dann den entsprechenden Zonen im Front- bzw. Fondbereich des Fahrzeugs zugeführt werden.

Durch die Anordnung des Hilfsgebläses 26 in der Versorgungsvorrichtung 10 und die getrennte Förderung von Kalt- und Warmluft darin wird eine Versorgung des Fondbereichs des Fahrzeugs mit nur einem Paar von Verbindungskanälen 15 und 15' ohne Druckeinbuße erreicht. Darüber hinaus ist es möglich, die Versorgung mit nur zwei rückwärtigen Verbindungskanälen sicherzustellen, die in raumsparender Weise an dem Schalthebel 16 vorbei geführt sind.

### Bezugszeichenliste

- 10: Versorgungsvorrichtung
- 12: Getriebetunnel
- 14, 14': vordere Verbindungskanäle
- 15, 15': rückwärtige Verbindungskanäle
- 16: Schalthebel
- 18: Gehäuse
- 20: Hauptgebläse
- 22: Verdampfer
- 24: Heizkern
- 26: Hilfsgebläse
- 28: Lufteinlass
- 30, 30': erste Kalt- und Warmluftauslässe
- 32, 32': zweite Kalt- und Warmluftauslässe
- 34: Ansaugtrakt
- 36: Kaltluftkammer
- 38: Abtrennung
- 40: Warmluftkammer
- 42: Hilfsgebläsegehäuse
- 44: Gebläserädereinheit
- 46: Antriebsmotor
- 48, 48': obere und untere Gehäuseabschlüsse
- 50: Trennwand
- 52, 52': Gebläseräder
- 54: Trennwand
- 56, 56': Hilfsgebläsekammern
- 57: Leitfläche
- 58: vorderer Misch- und Auslasskanal
- 60: Drosselklappe
- 62, 62': weiterer rückwärtige Verbindungskanäle
- 64: weiterer rückwärtiger Verbindungskanal
- 66: hinterer Misch- und Auslasskanal
- 68: hinterer Misch- und Auslasskanal
- 70: Drosselklappe
- 72: Drosselklappe

## Patentansprüche

1. Verfahren zur Bereitstellung von temperierter Luft für einen ersten und einen zweiten Bereich in einem Fahrzeug, bei dem ein Kalt- und ein Warmluftstrom erzeugt werden,
aus dem Kalt- und dem Warmluftstrom jeweils wenigstens ein erster Kalt- bzw. Warmluftteilstrom gebildet wird und der erste Kaltluftteilstrom und der erste Warmluftteilstrom zu einem ersten temperierten Teilstrom für den ersten Bereich gemischt werden, und
aus dem Kalt- und dem Warmluftstrom jeweils wenigstens ein zweiter Kalt- bzw. Warmluftteilstrom gebildet wird, **dadurch gekennzeichnet, dass** der zweite Kaltluftteilstrom und der zweite Warmluftteilstrom mittels eines Hilfsgebläses (26) getrennt gefördert und stromabwärts des Hilfsgebläses (26) zu einem zweiten temperierten Teilstrom für den zweiten Bereich gemischt werden.

2. Verfahren nach Anspruch 1,
**dadurch gekennzeichnet,**
**dass** der mit Hilfe des Hilfsgebläses (26) geförderte zweite Kaltluftteilstrom und der mit Hilfe des Hilfsgebläses (26) geförderte zweite Warmluftteilstrom jeweils in weitere Kalt- bzw. Warmluftteilströme aufgeteilt werden, und
**dass** zur Bereitstellung von temperierter Luft für verschiedene Zonen in dem zweiten Bereich jeweils ein entsprechender weiterer Kaltluftteilstrom und ein entsprechender weiterer Warmluftteilstrom gemischt werden.

3. Verfahren nach Anspruch 1 oder 2,
**dadurch gekennzeichnet,**
**dass** der zweite Bereich ein Fondbereich des Fahrzeugs ist.

4. Versorgungsvorrichtung zur Bereitstellung von Kalt- und Warmluft für eine Fahrzeugklimaanlage mit
einer Kalt- und Warmluftquelle (18, 20, 22, 24), mittels derer ein Kalt- und ein Warmluftstrom erzeugbar ist und die einen ersten Kaltluftauslass (30) für bereitzustellende Kaltluft sowie einen ersten Warmluftauslass (30') für bereitzustellende Warmluft aufweist, und einem Hilfsgebläse (26), das einen zur Zuführung von Kaltluft mit der Kalt- und Warmluftquelle (18, 20, 22, 24) verbundenen Kaltlufteinlass (42, 52) und einen zur Zuführung von Warmluft mit der Kalt- und Warmluftquelle (18, 20, 22, 24) verbundenen Warmlufteinlass (42, 52') **dadurch gekennzeichnet, dass** die Versorgungsvorrichtung einen zweiten Kaltluftauslass (32) und einen zweiten Warmluftauslass (32') aufweist und dass mit dem Hilfsgebläse (26) die den Einlässen (42, 52, 52') des Hilfsgebläses (26) zugeführten Luftströme getrennt den entsprechenden zweiten Auslässen (32, 32') zum Ausstoß von bereitzustellender Kalt- bzw. Warmluft zuführbar sind.

5. Versorgungsvorrichtung nach Anspruch 4,
**dadurch gekennzeichnet,**
**dass** das Hilfsgebläse (26) zwei Gebläseräder (52, 52') umfasst, die gemeinsam von einer Antriebseinrichtung (46) angetrieben sind.

6. Versorgungsvorrichtung nach Anspruch 5,
**dadurch gekennzeichnet,**
**dass** die Gebläseräder (52, 52') gemeinsam in einem einstückigen Bauteil (44) ausgebildet sind.

7. Versorgungsvorrichtung nach einem der Ansprüche 4 bis 6,
**dadurch gekennzeichnet,**
**dass** das Hilfsgebläse (26) zusammen mit der Kalt- und Warmluftquelle (18, 20, 22, 24) in einem gemeinsamen Gehäuse (18) angeordnet ist.

8. Versorgungsvorrichtung nach einem der Ansprüche 4 bis 7,
**dadurch gekennzeichnet,**
**dass** die Kalt- und Warmluftquelle (18, 20, 22, 24) ein mit einem Lufteinlass (28) für zu temperierende Luft verbundenes Hauptgebläse (20),
eine über einen Zuführungskanal (34) mit dem Hauptgebläse (20) verbundene Kühleinrichtung (22),
eine mit der Kühleinrichtung (22) verbundene, dieser nachgeordnete und zu dem ersten Kaltluftauslass (30) führende Kaltluftkammer (36),
eine mit der Kaltluftkammer (36) verbundene Heizeinrichtung (24) und
eine mit der Heizeinrichtung (24) verbundene, dieser nachgeordnete und zu dem ersten Warmluftauslass (30') führende Warmluftkammer (40) aufweist,
wobei der Kalt- bzw. Warmlufteinlass (42, 52, 52') des Hilfsgebläses (26) mit der Kalt- bzw. Warmluftkammer (36, 40) verbunden ist.

9. Versorgungsvorrichtung nach Anspruch 7 und 8,
**dadurch gekennzeichnet,**
**dass** die Heizeinrichtung (24) und das Hilfsgebläse (26) direkt benachbart zueinander so angeordnet sind, dass ein Teilstrom eines von der Heizeinrichtung (24) bereitgestellten Warmluftstroms quer zur Stromrichtung des restlichen Warmluftstroms von dem Hilfsgebläse (26) ansaugbar ist.

10. Klimaanlage zur Versorgung eines ersten und eines zweiten Bereichs in einem Fahrzeug mit temperierter Luft mit einer Versorgungsvorrichtung (10) nach einem der Ansprüche 4 bis 9,
wenigstens einer mit dem ersten Kaltluftauslass (30) und dem ersten Warmluftauslass (30') über getrennte Verbindungskanäle (14, 14') verbundenen ersten Dosier- und/oder Mischeinrichtung (60) zur Dosierung und/oder Mischung von Warm- und Kaltluft zur Bereitstellung von temperierter Luft für den ersten Bereich sowie wenigstens einer mit dem zweiten Kaltluftauslass (32) und dem zweiten Warmluftauslass (32') über getrennte Verbindungskanäle (15, 15') verbundenen zweiten Dosier- und/oder Mischeinrichtung (70, 72) zur Dosierung und/oder Mischung von Warm- und Kaltluft zur Bereitstellung von temperierter Luft für den zweiten Bereich.

11. Klimaanlage nach Anspruch 10,
**dadurch gekennzeichnet,**
**dass** sich wenigstens ein Verbindungskanal (15) für Kaltluft und ein entsprechender Verbindungskanal (15') für Warmluft, insbesondere jeweils für den zweiten Bereich, wenigstens einmal verzweigt und in bzw. an den entsprechenden Zweigen (62, 62', 64) für Kalt- bzw. Warmluft jeweils Dosier- und/oder Mischeinrichtungen (70, 72) angeordnet sind.

12. Klimaanlage nach Anspruch 11,
**dadurch gekennzeichnet,**
**dass** sich die mit den zweiten Auslässen (32, 32') verbundenen Verbindungskanäle (15, 15') jeweils in vier Zweige verzweigen, von denen jeweils zwei einen oberen und unteren Bereich einer linken Fahrzeugseite und jeweils zwei andere einen oberen und unteren Bereich einer rechten Fahrzeugseite versorgen.

13. Klimaanlage nach einem der Ansprüche 10 bis 12,
**dadurch gekennzeichnet,**
**dass** der zweite Bereich ein Fondbereich des Fahrzeugs ist.

## Claims

1. A method of making available temperature controlled air for a first region and for a second region in a vehicle, in which
a cold air flow and a hot air flow are generated;
in each case at least one first cold air part flow and one first hot air part flow respectively are formed from the cold air flow and the hot air flow and the first cold air part flow and the first hot air part flow are mixed to form a first temperature controlled part flow for the first region; and
in each case at least one second cold air part flow and one second hot air part flow respectively are formed from the cold air flow and the hot air flow, **characterized in that** the second cold air part flow and the second hot air part flow are transported separately by means of an auxiliary blower (26) and are mixed to form a second temperature controlled part flow for the second region downstream of the auxiliary blower (26).

2. A method in accordance with claim 1, **characterized in that** the second cold air part flow transported with the help of the auxiliary blower (26) and the second hot air part flow transported with the help of the auxiliary blower (26) are each split into further cold air part flows and hot air part flows; and
**in that** a corresponding further cold air part flow and a corresponding further hot air part flow are mixed to make available temperature controlled air for different zones in the second region.

3. A method in accordance with claim 1 or claim 2, **characterized in that** the second region is a backseat region of the vehicle.

4. A supply apparatus to make available cold air and hot air for a vehicle air conditioning plant comprising
a cold air source and a hot air source (18, 20, 22, 24) by means of which a cold air flow and a hot air flow can be generated and which has a first cold air outlet (30) for cold air to be made available and a first hot air outlet (30') for hot air to be made available; and
an auxiliary blower (26) which has a cold air inlet (42, 52) connected to the cold air source and hot air source (18, 20, 22, 24) for the supply of cold air and a hot air inlet (42, 52') connected to the cold air source and hot air source (18, 20, 22, 24) for the supply of hot air, **characterized in that** the supply apparatus has a second cold air outlet (32) and a second hot air outlet (32'); and **in that** the air flows supplied to the inlets (42, 52, 52') of the auxiliary blower (26) can be separately supplied by the auxiliary blower (26) to the corresponding second outlets (32, 32') to discharge cold air or hot air respectively to be made available.

5. A supply apparatus in accordance with claim 4, **characterized in that** the auxiliary blower (26) includes two blower wheels (52, 52') which are jointly driven by a drive apparatus (46).

6. A supply apparatus in accordance with claim 5, **characterized in that** the blower wheels (52, 52') are jointly formed in a one-piece component (44).

7. A supply apparatus in accordance with any one of claims 4 to 6, **characterized in that** the auxiliary blower (26) is arranged together with the cold air source and hot air source (18, 20, 22, 24) in a common housing (18).

8. A supply apparatus in accordance with any one of claims 4 to 7, **characterized**
**in that** the cold air source and hot air source (18, 20, 22, 24) has a main blower (20) connected to an air inlet (28) for air to be temperature controlled,
has a cooling device (22) connected to the main blower (20) via a supply passage (34),
has a cold air chamber (36) connected to and after the cooling device (22) and leading to the first cold air outlet (30),
has a heating device (24) connected to the cold air chamber (36), and
has a hot air chamber (40) connected to and after the heating device (24) and leading to the first hot air outlet (30'),
wherein the cold air inlet and hot air inlet (42, 52, 52') of the auxiliary blower (26) are respectively connected to the cold air chamber and hot air chamber (36, 40).

9. A supply apparatus in accordance with claim 7 and claim 8, **characterized in that** the heating device (24) and the auxiliary blower (26) are arranged directly adjacently to one another such that a part flow of a hot air flow made available by the heating device (24) can be sucked in by the auxiliary blower (26) transversely to the flow direction of the remaining hot air flow.

10. An air conditioning system for supplying a first region and a second region in a vehicle with temperature controlled air comprising
a supply apparatus (10) in accordance with any one of claims 4 to 9; at least one first metering and/or mixing device (60) connected to the first cold air outlet (30) and to the first hot air outlet (30') via separate connection passages (14, 14') to meter and/or mix hot air and cold air to make available temperature controlled air for the first region; and
at least one second metering and/ or mixing device (70, 72) connected to the second cold air outlet (32) and the second hot air outlet (32') via separate connection passages (15, 15') to meter and/or mix hot air and cold air to make available temperature controlled air for the second region.

11. An air conditioning system in accordance with claim 10, **characterized in that** at least one connection passage (15) for cold air and a corresponding connection passage (15') for hot air, in particular for the second region in each case, branches at least once and metering and/or mixing devices (70, 72) respectively are arranged in or at the corresponding branches (62, 62', 64) for cold air and hot air respectively.

12. An air conditioning system in accordance with claim 11, **characterized in that** the connection passages (15, 15') connected to the second outlets (32, 32') each branch into four branches of which two respectively supply an upper region and a lower region of a left hand vehicle side and two others respectively supply an upper region and a lower region of a right hand vehicle side.

13. An air conditioning system in accordance with any one of claims 10 to 12, **characterized in that** the second region is a backseat region of the vehicle.

## Revendications

1. Procédé pour fournir de l'air à température régulée pour une première et une deuxième zone, dans un véhicule, dans lequel un flux d'air froid et un flux d'air chaud sont produits,
à partir du flux d'air froid et du flux d'air chaud, est chaque fois formé au moins un premier flux partiel d'air froid et d'air chaud, et le premier flux partiel d'air froid et le premier flux partiel d'air chaud sont mélangés pour produire un premier flux partiel à température réglée pour la première zone, et, à partir du flux d'air froid et du flux d'air chaud, est chaque fois formé au moins un deuxième flux partiel d'air froid et d'air chaud, **caractérisé en ce que** le deuxième flux partiel d'air froid et le deuxième flux partiel d'air chaud sont transportés séparément à l'aide d'une soufflante auxiliaire (26) et mélangés en aval de la soufflante auxiliaire (26) pour produire un deuxième flux partiel à température réglée pour la deuxième zone.

2. Procédé selon la revendication 1,
**caractérisé en ce que**
le deuxième flux partiel d'air froid, transporté à l'aide de la soufflante auxiliaire (26), et le deuxième flux partiel d'air chaud, transporté à l'aide de la soufflante auxiliaire (26), sont chaque fois subdivisés en d'autres flux partiels d'air froid et d'air chaud, et
**en ce que**, pour fournir de l'air à température réglée pour différentes régions dans la deuxième zone, chaque fois, un autre flux partiel d'air froid correspondant et un autre flux partiel d'air chaud correspondant sont mélangés.

3. Procédé selon la revendication 1 ou 2,
**caractérisé en ce que**
la deuxième zone est une zone arrière du véhicule.

4. Dispositif d'alimentation pour fournir de l'air froid et de l'air chaud pour une installation de climatisation pour véhicule, comprenant
une source d'air chaud et d'air froid (18, 20, 22, 24), au moyen de laquelle peuvent être produits un flux d'air froid et un flux d'air chaud, et qui présente une première évacuation d'air froid (30) pour de l'air froid à fournir, ainsi qu'une première évacuation d'air chaud (30') pour de l'air chaud à fournir, et une soufflante auxiliaire (26), comprenant une admission d'air froid (42, 52), reliée à la source d'air froid et d'air chaud (18, 20, 22, 24) pour l'amenée d'air froid, et une admission d'air chaud (42, 52') reliée à la source d'air froid et d'air chaud (18, 20, 22, 24) pour l'amenée d'air chaud, **caractérisé en ce que** le dispositif d'alimentation présente une deuxième évacuation d'air froid (32) et une deuxième évacuation d'air chaud (32'), et
**en ce que**, avec la soufflante auxiliaire (26), des flux d'air amenés aux admissions (42, 52, 52') de la soupape auxiliaire (26) peuvent être amenés séparément aux deuxièmes évacuations (32, 32') correspondantes, pour expulser de l'air froid ou de l'air chaud à fournir.

5. Dispositif d'alimentation selon la revendication 4,
**caractérisé en ce que**
la soufflante auxiliaire (26) comprend deux roues de soufflante (52, 52'), entraînées conjointement par un dispositif d'entraînement (46).

6. Dispositif d'alimentation selon la revendication 5,
**caractérisé en ce que**
les roues de soufflante (52, 52') sont réalisées conjointement dans un composant (44) monobloc.

7. Dispositif d'alimentation selon l'une des revendications 4 à 6,
**caractérisé en ce que**
la soufflante auxiliaire (26) est disposée dans un boîtier (18) commun, conjointement avec la source d'air froid et d'air chaud (18, 20, 22, 24).

8. Dispositif d'alimentation selon l'une des revendications 4 à 7,
**caractérisé en ce que**
la source d'air froid et d'air chaud (18, 20, 22, 24) présente
une soufflante principale (20), reliée à une admission d'air (28) pour l'air dont on règle la température,
un dispositif de refroidissement (22) relié à la soufflante principale (20) par un canal d'amenée (34),
une chambre d'air froid (36), reliée au dispositif de refroidissement (22), disposée en aval de celui-ci et menant à la première évacuation d'air froid (30),
un dispositif de chauffage (24) relié à la chambre à air froid (36), et
une chambre à air chaud (40) reliée au dispositif de chauffage (24), disposée en aval de celui-ci et menant à la première évacuation d'air chaud (30'),
où l'admission d'air froid ou chaud (42, 52, 52') de la soufflante auxiliaire (26) est reliée à la chambre d'air froid ou chaud (36, 40).

9. Dispositif d'alimentation selon les revendications 7 et 8,
**caractérisé en ce que**
le dispositif de chauffage (24) et la soufflante auxiliaire (26) sont disposés directement au voisinage l'un de l'autre, de manière qu'un flux partiel d'un flux d'air chaud, fourni par le dispositif de chauffage (24), puisse être aspiré par la soufflante auxiliaire (26) transversalement par rapport à la direction d'écoulement du flux d'air chaud restant.

10. Installation de climatisation pour alimentation en air à température réglée d'une première et d'une deuxième zone dans un véhicule, avec un dispositif d'alimentation (10) selon l'une des revendications 4 à 9,
au moins un dispositif de dosage et/ou de mélange (60), relié à la première évacuation d'air froid (30) et à la première évacuation d'air chaud (30') par des canaux de liaison (14, 14') séparés, le dispositif (60) servant à doser et/ou à mélanger de l'air chaud et de l'air froid pour fournir de l'air à température réglée pour la première zone, ainsi qu'au moins un deuxième dispositif de dosage et/ou de mélange (70, 72), relié à la deuxième évacuation d'air froid (32) et la deuxième évacuation d'air chaud (32') par des canaux de liaison (15, 15') séparés, le dispositif (70, 72) servant au dosage et/ou au mélange d'air chaud et d'air froid pour fournir de l'air à température réglée pour la deuxième zone.

11. Installation de climatisation selon la revendication 10,
**caractérisée en ce qu'**
au moins un canal de liaison (15) pour de l'air froid et un canal de liaison (15') correspondant pour de l'air chaud, en particulier chaque fois pour la deuxième zone, se ramifient au moins une fois et des dispositifs de dosage et/ou de mélange (70, 72) sont chaque fois disposés dans, respectivement sur, des branches (62, 62', 64) correspondantes, pour de l'air froid ou de l'air chaud.

12. Installation de climatisation selon la revendication 11,
**caractérisée en ce que**
les canaux de liaison (15, 15'), reliés aux deuxièmes évacuations (32, 32'), se ramifient respectivement en quatre branches ; deux premières alimentant respectivement une zone supérieure et inférieure d'un côté gauche de véhicule et, deux autres alimentant respectivement une zone supérieure et inférieure d'un côté droit de véhicule.

13. Installation de climatisation selon l'une des revendications 10 à 12,
**caractérisée en ce que**
la deuxième zone est une zone arrière du véhicule.
